Europäisches Patentamt

European Patent Office

Office européen des brevets

(19)

(11) Veröffentlichungsnummer: **0 519 272 A1**

## (12) EUROPÄISCHE PATENTANMELDUNG

(21) Anmeldenummer: **92109357.1**

(22) Anmeldetag: **03.06.92**

(51) Int. Cl.5: **B60T 1/06**

(30) Priorität: **18.06.91 DE 4120020**

(43) Veröffentlichungstag der Anmeldung:
**23.12.92 Patentblatt 92/52**

(84) Benannte Vertragsstaaten:
**BE DE DK ES FR GB GR IT NL PT SE**

(71) Anmelder: **Bergische Achsenfabrik Fr. Kotz & Söhne**
**Am Ohlerhammer**
**W-5276 Wiehl 1(DE)**

(72) Erfinder: **Ebbinghaus, Wilfried**
**Perkerstrasse 42**
**W-5276 Wiehl(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11(DE)**

(54) **Verbindung zwischen Nabe und Bremstrommel.**

(57) Gegenstand der Erfindung ist eine Verbindung zwischen Nabe und Bremstrommel einer Trommelbremse für Fahrzeuge, insbesondere Anhänger, mit einem an der Nabe (4) ausgebildeten Befestigungsflansch (5) und einem an der Bremstrommel (10) ausgebildeten Verbindungsflansch (9), die sich überlappen und in denen Bohrungen für Radbolzen (11) vorgesehen sind. Um die Zentrierung und die Festigkeit der Verbindung zu verbessern wird vorgeschlagen, die Anlageflächen (8,12) zwischen dem Befestigungsflansch (5) und dem Verbindungsflansch (9) unter einem spitzen Winkel α zur Radialebene zu neigen, so daß beide Flansche am Ansatz eine größere Materialstärke als an ihrem freien Rand haben.

Fig. 2

EP 0 519 272 A1

Gegenstand der Erfindung ist eine Verbindung zwischen Nabe und Bremstrommel einer Trommelbremse für Fahrzeuge, insbesondere Anhänger, mit einem an der Nabe ausgebildeten Befestigungsflansch und einem an der Bremstrommel ausgebildeten Verbindungsflansch, die sich überlappen und in denen Bohrungen für Radbolzen vorgesehen sind.

Eine Verbindung zwischen Nabe und Bremstrommel einer Trommelbremse ist beispielsweise aus der DE-PS 28 18 682 bekannt. Dabei liegen die Anlagenflächen zwischen dem Befestigungsflansch der Nabe und dem Verbindungsflansch der Bremstrommel in einer orthogonal zur Drehachse ausgerichteten Radialebene. Eine Zentrierung dieser Verbindung ist nur mit den durch Bohrungen gesteckten Radbolzen möglich. Außerdem haben die Befestigungs- und Verbindungsflansche in radialer Richtung auf ihrer gesamten Breite die gleiche Materialstärke.

Davon ausgehend liegt der Erfindung die **Aufgabe** zugrunde, eine verbesserte Verbindung zwischen Nabe und Bremstrommel einer Trommelbremse zu schaffen, die eine bessere Zentrierung und gleichzeitig eine Vergrößerung der gefährdeten Querschnitte an Nabe und Bremstrommel ermöglicht.

Als technische **Lösung** wird vorgeschlagen, daß die Anlageflächen zwischen dem Befestigungsflansch und dem Verbindungsflansch unter einem spitzen Winkel $\alpha$ zur Radialebene verlaufen und einen kegelförmigen bzw. einen trichterförmigen Konus bilden, so daß beide Flansche am Ansatz eine größere Materialstärke als am freien Rand haben.

Der spitze Winkel $\alpha$ kann zwischen 5 bis 15° groß sein und beträgt bei einer bevorzugten Ausführungsform 10°.

Eine erfindungsgemäß ausgebildete Verbindung hat den **Vorteil** einer besseren Zentrierung der Bremstrommel an der Nabe und ermöglicht die Ausbildung von Befestigungsflanschen und Verbindungsflanschen mit einer größeren Materialstärke im Bereich der gefährdeten Querschnitte. Daraus resultiert eine Verbindung mit erhöhter Festigkeit und geringerer Elastizität. Dadurch wiederum verbessern sich die Rundlaufeigenschaften der Bremstrommel einerseits und der Räder andererseits.

Weitere Einzelheiten und Vorteile ergeben sich aus der nachfolgenden Beschreibung der zugehörigen Zeichnungen, in denen eine Trommelbremse mit einer erfindungsgemäß ausgebildeten Verbindung zwischen Nabe und Bremstrommel dargestellt worden sind. In den Zeichnungen zeigen:

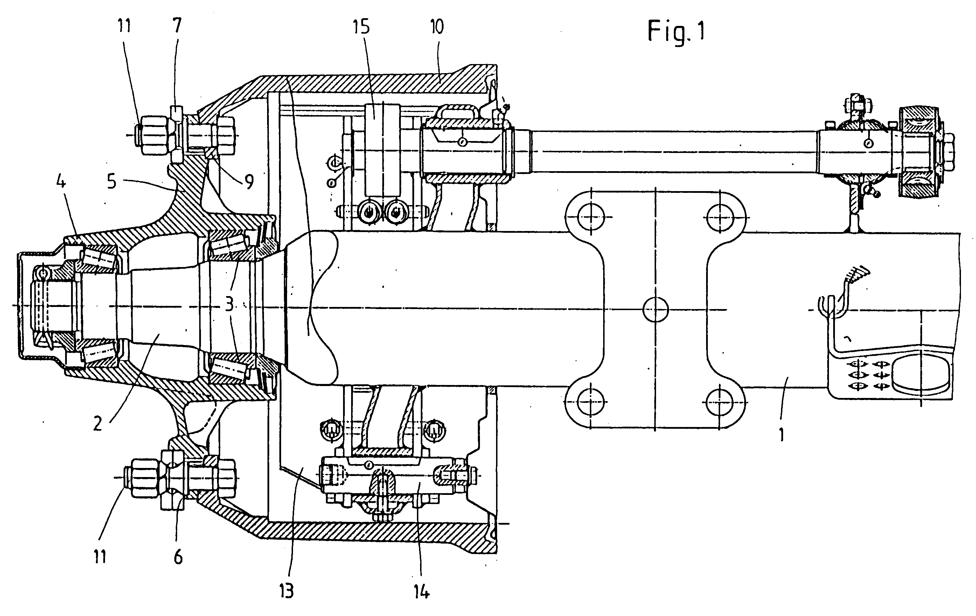

Fig. 1    Eine auf einer Achse montierte Nabe mit Bremstrommel im Längsschnitt;

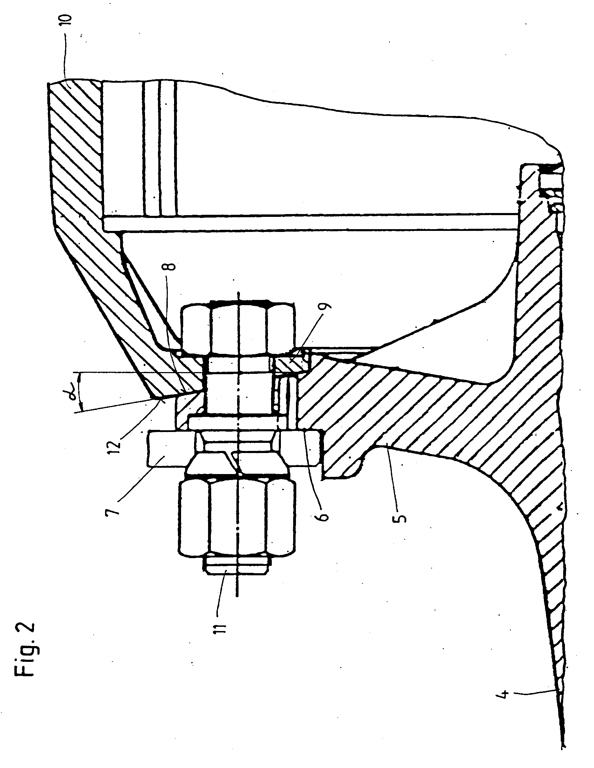

Fig. 2    einen vergrößerten Ausschnitt aus Fig. 1 zur Veranschaulichung der Verbindung ebenfalls im Querschnitt.

Auf einem mit einem Achskörper 1 verbundenen Achsschenkel 2 ist mit Kegelrollenlagern 3 eine Nabe 4 drehbar gelagert. An der Nabe 4 ist ein in radialer Richtung abstehender Befestigungsflansch 5 ausgebildet, der an seiner freien Seite eine Anlagefläche 6 für ein Rad 7 und auf seiner nach innen gerichteten Seite eine Anlagefläche 8 für einen Verbindungsflansch 9 einer Bremstrommel 10 hat. Der Verbindungsflansch 9 der Bremstrommel 10 wird mit Radbolzen 11 gegen die Anlagefläche 8 des Befestigungsflansches 5 an der Nabe 4 gezogen und an dieser zentriert.

Die beiden Anlagenflächen 8 und 12 an der Nabe 4 und der Bremstrommel 10 sind unter einem spitzen Winkel $\alpha$ gegen die orthogonal auf der Drehachse stehende Radialebene geneigt. Dadurch ergibt sich am Befestigungsflansch 5 der Nabe 4 ein kegelförmiger Konus und an der Anlagefläche 12 der Bremstrommel 10 ein trichterförmiger Konus, die aufeinander passen.

Der Befestigungsflansch 5 an der Nabe 4 hat an seinem Ansatz eine größere Materialstärke als an seinem freien Rand. Der Verbindungsflansch 9 an der Bremstrommel 10 hat an seinem Ansatz ebenfalls eine größere Materialstärke als an seinem innenliegenden freien Rand. Aus der Geometrie der Befestigungs- und Verbindungsflansche ergibt sich außer einer besseren Zentrierung der Bremstrommel 10 auf der Nabe 4 auch eine Verbindung mit größerer Festigkeit und geringerer Elastizität. Das wirkt sich positiv auf die Rundlaufeigenschaften der Räder und der Bremstrommel aus, wodurch der Reifenabrieb und der Bremstrommelverschleiß minimiert werden.

Innerhalb der Bremstrommel 10 sind Bremsbacken 13 angeordnet, die sich einerseits auf einem Stützlager 14 abstützen und am anderen Ende mit einem Nocken 15 gegen die Innenwand der Bremstrommel 10 verspannt werden können. Die Rundlaufeigenschaften der Bremstrommel 10 sind deshalb sowohl für den Bremsbelagverschleiß als auch den Bremstrommelverschleiß von Bedeutung.

## Bezugszeichenliste

| | |
|---|---|
| 1 | Achskörper |
| 2 | Achsschenkel |
| 3 | Kegelrollenlager |
| 4 | Nabe |
| 5 | Befestigungsflansch |
| 6 | Anlagefläche |
| 7 | Rad |
| 8 | Anlagefläche |
| 9 | Verbindungsflansch |
| 10 | Bremstrommel |
| 11 | Radbolzen |

| 12 | Anlagefläche |
| 13 | Bremsbacke |
| 14 | Stützlager |
| 15 | Nocken |

**Patentansprüche**

1. Verbindung zwischen Nabe und Bremstrommel einer Trommelbremse für Fahrzeuge, insbesondere Anhänger, mit einem an der Nabe (4) ausgebildeten Befestigungsflansch (5) und einem an der Bremstrommel (10) ausgebildeten Verbindungsflansch (9), die sich überlappen und in denen Bohrungen für Radbolzen (11) vorgesehen sind,
   **dadurch gekennzeichnet,**
   daß die Anlageflächen (8,12) zwischen dem Befestigungsflansch (5) und dem Verbindungsflansch (9) unter einem spitzen Winkel $\alpha$ zur Radialebene verlaufen und einen kegelförmigen und einen trichterförmigen Konus bilden, so daß beide Flansche (5,9) am Ansatz eine größere Materialstärke als am freien Rand haben.

2. Verbindung nach Anspruch 1, dadurch gekennzeichnet, daß der Winkel $\alpha$ 5 bis 15°, vorzugsweise 10° beträgt.

3. Bremstrommel für eine Verbindung nach Anspruch 1, dadurch gekennzeichnet, daß die Anlagefläche (12) unter einem Winkel $\alpha$ zur Radialebene verläuft und einen trichterförmigen Konus bildet.

Fig.1

Fig. 2

EP 0 519 272 A1

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-B-1 112 699 (GEORG FISCHER)<br>* Spalte 3, Zeile 48 - Zeile 58; Abbildung 1 *<br>* Spalte 3, Zeile 63 - Spalte 4, Zeile 3; Abbildung 2 *<br>--- | 1 | B60T1/06 |
| D,A | DE-C-2 818 682 (ROCKWELL INTERNATIONAL)<br><br>----- | | |

| RECHERCHIERTE SACHGEBIETE (Int. Cl.5 ) |
|---|
| B60T<br>F16D |

Der vorliegende Recherchenbericht wurde für alle Patentansprüche erstellt

| Recherchenort | Abschlußdatum der Recherche | Prüfer |
|---|---|---|
| BERLIN | 01 SEPTEMBER 1992 | LUDWIG H.J. |